Europäisches Patentamt

European Patent Office

Office européen des brevets

(19)

(11)  EP 0 736 417 B1

(12)  **EUROPÄISCHE PATENTSCHRIFT**

(45) Veröffentlichungstag und Bekanntmachung des
Hinweises auf die Patenterteilung:
**21.07.1999  Patentblatt 1999/29**

(51) Int. Cl.⁶: **B60R 9/058**

(21) Anmeldenummer: 96105484.8

(22) Anmeldetag: **04.04.1996**

(54)  **Tragelement für Kraftfahrzeug-Dachlastenträger**

Vehicle roof carrier supporting means

Elément support de porte-charges pour toit de véhicule

(84) Benannte Vertragsstaaten:
**DE IT SE**

(30) Priorität: **07.04.1995 DE 19513261**

(43) Veröffentlichungstag der Anmeldung:
**09.10.1996  Patentblatt 1996/41**

(73) Patentinhaber:
**silvretta-sherpas Sportartikel GmbH
85757 Karlsfeld (DE)**

(72) Erfinder: **Zoor, Rheinhold
82223 Eichenau (DE)**

(74) Vertreter:
**Zmyj, Erwin, Dipl.-Ing., Dipl.-Wirtsch.-Ing.
Rosenheimer Strasse 52/II
81669 München (DE)**

(56) Entgegenhaltungen:
**WO-A-89/04776          DE-A- 3 522 599
FR-A- 2 147 385          US-A- 4 076 157
US-A- 4 757 929**

• PATENT ABSTRACTS OF JAPAN vol. 010, no.
368 (M-543), 9.Dezember 1986 & JP-A-61 163040
(SEIKOU KOGYO KK), 23.Juli 1986,
• PATENT ABSTRACTS OF JAPAN vol. 010, no.
037 (M-453), 14.Februar 1986 & JP-A-60 189654
(IKEDA BUTSUSAN KK), 27.September 1985,

## Beschreibung

Die Erfindung bezieht sich auf ein Tragelement für Kraftfahrzeug-Dachlastenträger mit einem quer zur Fahrzeuglängsachse verlaufenden Tragholm und daran befestigten Stützfüßen für die Auflage auf dem Dach oder in der Regenrinne des Kraftfahrzeuges sowie mit einer jedem Stützfuß zugeordneten, als loses Bauteil ausgeführten Spannkralle, die die außenliegende Dachkontur oder die Regenrinne, die als Anlagefläche für die Spannkralle dient, umgreift und mittels einer Spannvorrichtung gegen ihre Anlagefläche spannbar ist, wobei die Spannvorrichtung lose durch den Stützfuß hindurchgreift und an einem zwischen den Stützfüßen gelegenen Bereich des Tragholmes an diesen angreift.

Ein Tragelement dieser Art ist aus der US-A-4 076 157 bekannt. Dieses Tragelement ist nur in Verbindung mit einer Regenrinne, in die der Stützfuß einsetzbar ist, verwendbar, weil dieser Stützfuß bei Aufsetzen auf eine rinnenlose Dachkontur beim Festziehen der Spannvorrichtung von dieser Dachkontur unter Verformung des Stützfußes nach außen abrutschen würde. Dies ist darin begründet, daß die Spannvorrichtung lose, d.h. frei von einer Kraftübertragung auf den Stützfuß durch diesen hindurchgreifend am Tragholm angreift.

Ähnliche Verhältnisse liegen auch bei einem Tragelement nach FR-A-21 47 385 vor. Dort greift die Spannvorrichtung allerdings nicht an einem quer verlaufenden Tragholm, sondern an einem längslaufenden Tragholm an. Die Kräfteverhältnisse bezogen auf den Stützfuß bleiben aber die gleichen.

Ein weiteres Problem dieser bekannten Konstruktion besteht darin, daß durch hohe Abziehkräfte, die bei einem Unfall aufgrund der Massenträgheit der Dachlast auf das Tragelement einwirken, das Tragelement im Bereich der Stützfüße verformt oder sogar abgerissen werden kann. Die somit frei werdende Dachlast stellt damit eine besondere Gefahrenquelle dar. Selbst wenn man dieser Gefahr durch besonders stabile Stützfüße begegnen wollte, so ist damit die Gefahr, daß das Tragelement mit den Spannkrallen vom Dach abgezogen wird, nicht gebannt, weil diese Spannkrallen wegen der Verformbarkeit des Kraftfahrzeugdaches nicht beliebig fest verspannt werden können. Die modernen Kraftfahrzeuge sind nur in den außenliegenden Bereichen des Daches durch einen Dachholm versteift, während die Dachhaut verhältnismäßig leicht verformbar ist. Trotz der Anordnung solcher Dachholme ist es mit Hilfe der Spannschrauben möglich, die Spannkrallen so fest anzuziehen, daß man wellenförmige Verformungen der Dachhaut beobachten kann. Aus diesem Grunde kann man nur eine begrenzte Haltekraft der Spannkrallen mittels der Spannschrauben einstellen.

Diese Probleme treten bei den weiter oben erläuterten bekannten Tragelementen nicht auf, da hier die Stützfüße an stabilen Regenrinnen befestigt werden können, so daß dieses Problem bei einer stabilen Ausgestaltung des Stützfußes entsprechend der FR-A-21 47 385 gelöst werden kann.

Aufgabe der Erfindung ist es, ein Tragelement der weiter oben angegebenen Art so auszugestalten, daß besonders hohe Haltekräfte und eine sichere Abstützung der Stützfüße auf Kraftfahrzeugdächern erzielbar sind, so daß die Gefahr eines Abziehens des Tragelementes vom Dach bei einem Unfall weitgehend ausgeschlossen ist.

Diese Aufgabe wird durch die im Anspruch 1 angegebenen Merkmale gelöst.

Der entscheidende Vorteil der erfindungsgemäßen Ausgestaltung besteht in der Erhöhung der Sicherheit, da durch diese Ausgestaltung die Haltekräfte an den Spannkrallen mit zunehmender Abziehkraft, die aus den Massenkräften der Dachlast bei einem Aufprall auf ein Hindernis entstehen, zunehmen. Bei Auftreten großer Abziehkräfte wird nämlich der Tragholm in Fahrtrichtung durchgebogen, woraus zwangsläufig eine Erhöhung der Spannkraft an den Spannkrallen eintritt, da diese über die Spannvorrichtung mit dem sich durchbiegenden bzw. sich verkürzenden Tragholm unmittelbar verbunden sind. Diese Verformung des Tragholmes erhöht also die Spannkraft an den Spannkrallen, woraus ersichtlich ist, daß mit zunehmender Durchbiegung aufgrund zunehmender Abziehkräfte die Haltekräfte der Spannkrallen größer werden. Bereits durchgeführte Versuche haben gezeigt, daß es selbst bei viermal so großen Abziehkräften, wie sie bisher bei Dachlastenträger als Grenzwerte angesehen wurden, es nicht möglich war, das Tragelement vom Dach des Kraftfahrzeuges abzuziehen.

Eine Weiterbildung der Erfindung ergibt sich dadurch, daß der Stützbereich am Stützfuß schräg nach außen geneigt ist. Die Ausbildung eines Stützbereiches ist vorgesehen, um unterschiedliche Breiten des Dachholmes und damit unterschiedliche Abstände zwischen dem Stützfuß und der Spannkralle dahingehend auszugleichen, daß das obere Ende Stützteiles immer am Stützbereich anliegt.

In einer Weiterbildung der Erfindung weist der Stützfuß für den kraftübertragungsfreien Durchgriff der Spannvorrichtung ein in Längsrichtung des Stützfußes verlaufendes Langloch auf, dessen kurze Achse dem Durchmesser der Spannvorrichtung angepaßt ist. Durch diese Ausgestaltung wird nicht nur ein kraftübertragungsfreier Durchgriff der Spannvorrichtung durch den Spannfuß ermöglicht, sondern es wird die Möglichkeit geschaffen, daß sich der Stützfuß in beiden Richtungen der Fahrzeuglängsachse an der Spannvorrichtung abstützen kann, wodurch eine größere Stabilität des Tragelementes erzielbar ist.

Die Spannvorrichtung kann als eine Schraube ausgebildet sein, die sich mit Ihrem Kopf an der Spannkralle abstützt und in eine am Tragholm, vorzugsweise gelenkig festgelegte Mutter einschraubbar ist.

In vorteilhafter Ausgestaltung der Erfindung kann die Spannvorrichtung eine am Tragholm befestigte und an ihrem freien Ende mit Innengewinde versehene Spannhülse und eine sich mit ihrem Kopf an der Spannkralle abstützende und in die Spannhülse einschraubbare Schraube umfassen.

Die Erfindung wird nachfolgend anhand eines in der Zeichnung dargestellten Ausführungsbeispieles näher erläutert. In der Zeichnung zeigen:

**Figur 1:** einen Schnitt durch ein Tragelement mit nur teilweise dargestelltem Tragholm;

**Figur 2:** eine Ansicht von oben auf das Tragelement in verkleinertem Maßstab; und

**Figur 3:** eine der Figur 2 entsprechende Draufsicht auf das Tragelement in einem durch Massenträgheitskräfte deformiertem Zustand.

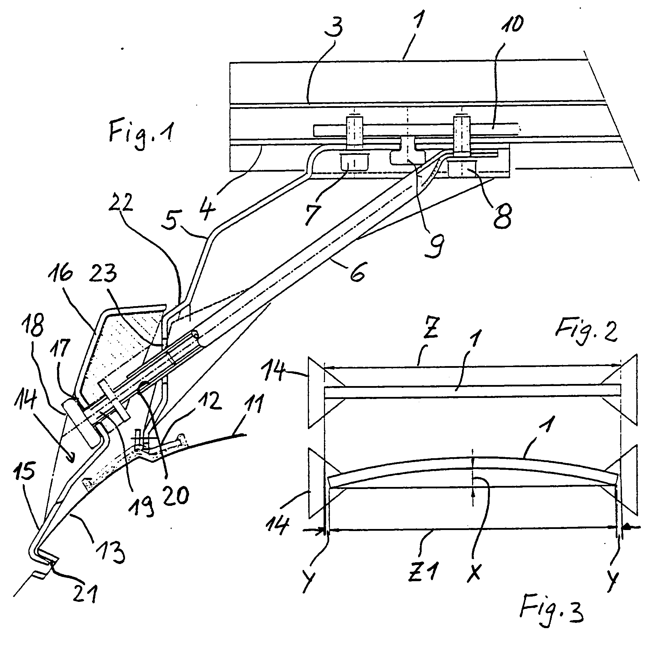

Wie aus Figur 1 ersichtlich, ist an einem nur teilweise dargestellten Tragholm 1, der als Hohlprofil mit im Innern ausgebildeten Versteifungsstegen 3 und 4 gefertigt ist, einerseits ein Stützfuß 5 und andererseits eine Spannhülse 6 mittels Schrauben 7 und 8 befestigt, die in eine mittels eines Kulissensteines 9 gehaltene, Gewindebohrungen aufweisende Platte 10 einschraubbar sind. Der Stützfuß 5 stützt sich auf einem mit 11 bezeichneten Kraftfahrzeugdach ab und weist an seinem unteren Ende ein der jeweiligen Dachform angepaßtes Auflagestück 12 auf. Eine den mit 13 bezeichneten Dachholm umgreifende Spannkralle 14 weist einen unteren Krallenteil 15 und einen oberen Stützteil 16 auf. Im mittleren Bereich ist eine Anlagefläche 17 für den Schraubenkopf 18 einer Spannschraube 19 ausgebildet, die in die Spannhülse 6, die an ihrem freien Ende ein Innengewinde 20 aufweist, einschraubbar ist. Beim Festspannen der Spannkralle mittels der Spannschraube 19 greift die Spannkralle 14 mit ihrem Krallenteil 15 an der unteren Fläche 21 des Dachholmes an, während sich der Stützteil 16 am Stützfuß 5 abstützt. Der Bereich, in welchem sich der Stützteil 16 am Stützfuß 5 abstützt, ist mit 22 bezeichnet und schräg geneigt. Dieser Stützbereich 22 ist vorgesehen, um unterschiedliche Breiten des Dachholmes 13 und damit unterschiedliche Abstände zwischen dem Stützfuß 5 und der Spannkralle 14 dahingehend auszugleichen, daß das obere Ende des Stützteiles 16 immer am Stützbereich 22 anliegt.

Die Spannhülse 6 ist durch ein Langloch 23 im Stützfuß 5 hindurchgeführt, so daß keine Kräfte beim Verspannen der Spannkralle durch die aus Spannhülse 6 und Spannschraube 19 bestehenden Spannvorrichtung auf den Stützfuß unmittelbar übertragen werden können. Selbstverständlich wird beim Festziehen der Spannschraube 19 der Stützfuß in Abhängigkeit vom Neigungswinkel der Spannhülse 6 mehr oder weniger auf das Dach gedrückt. Die kurze Achse des Langloches 23 ist dabei dem Durchmesser der Spannhülse 6 angepaßt, so daß sich der Stützfuß 5 in beiden Richtungen der Fahrzeuglängsachse an der Spannvorrichtung 6, 19 abstützen kann.

Figur 2 zeigt eine Draufsicht auf das Tragelement in der normalen Gebrauchslage, während Figur 3 denjenigen Zustand zeigt, in welchem der Tragholm 1 durch aufgetretene Massenkräfte um den Betrag X durchgebogen ist. Aufgrund dieser Durchbiegung tritt eine Verkürzung des Abstandes zwischen den Enden des Tragholmes 1 ein, der in Figur 2 mit Z und in Figur 3 mit Z1 bezeichnet ist. Die Verkürzung entspricht dem zweifachen Wert der mit Y bezeichneten Strecke, da diese Verkürzung an beiden Enden eintritt. Z entspricht also $Z1 + 2 \times Y$. Diese Verkürzung des Abstandes Z auf den Abstand Z1 führt aber dazu, daß die Spannkrallen 14, da sie über die Spannvorrichtung 6, 19 unmittelbar mit dem Tragholm 1 verbunden sind, mit einer erhöhten Spannkraft beaufschlagt werden.

**Patentansprüche**

1. Tragelement für Kraftfahrzeug-Dachlastenträger mit einem quer zur Fahrzeuglängsachse verlaufenden Tragholm (1) und daran befestigten Stützfüßen (5) für die Auflage auf dem Dach (11) oder in der Regenrinne des Kraftfahrzeuges sowie mit einer jedem Stützfuß (5) zugeordneten, als loses Bauteil ausgeführten Spannkralle (14), die die außenliegende Dachkontur oder die Regenrinne, die als Anlagefläche für die Spannkralle dient, umgreift und mittels einer Spannvorrichtung (6, 19) gegen ihre Anlagefläche spannbar ist, wobei die Spannvorrichtung (6, 19) lose durch den Stützfuß (5) hindurchgreift und an einem zwischen den Stützfüßen (5) gelegenen Bereich des Tragholmes (1) an diesen angreift, wobei die Spannkralle (14) einen Krallenteil (15) aufweist, der der Dachkontur (21) oder der Regenrinne zugeordnet ist, **dadurch gekennzeichnet,** daß die Spannkralle (14) zusätzlich einen Stützteil (16) aufweist, der sich am Stützfuß (5) abstützt.

2. Tragelement nach Anspruch 1, **dadurch gekennzeichnet,** daß der Stützbereich (22) für den Stützteil (16) am Stützfuß schräg nach außen geneigt ist.

3. Tragelement nach Anspruch 1 oder 2, **dadurch gekennzeichnet,** daß der Stützfuß (5) ein in Längsrichtung des Stützfußes verlaufendes Langloch (23) aufweist, dessen kurze Achse dem Durchmesser der Spannvorrichtung (6, 19) angepaßt ist.

4. Tragelement nach einem der Ansprüche 1 bis 3, **dadurch gekennzeichnet,** daß die Spannvorrichtung als Schraube ausgebildet ist die sich mit ihrem Kopf an der Spannkralle abstützt und in eine am Tragholm, vorzugsweise gelenkig festgelegte Mutter, einschraubbar ist.

**5.** Tragelement nach einem der Ansprüche 1 bis 3, **dadurch gekennzeichnet,** daß die Spannvorrichtung eine am Tragholm (1) befestigte und an ihrem freien Ende mit Innengewinde (20) versehene Spannhülse (6) und eine sich mit ihrem Kopf (18) an der Spannkralle (14) abstützende und in die Spannhülse (6) einschraubbare Schraube (19) umfaßt.

## Claims

**1.** Supporting element for motor vehicle roof load carrier with a supporting beam (1) extending transversely to the longitudinal axis of the vehicle and support feet (5) attached thereto for resting on the roof (11) or in the rain gutter of the motor vehicle as well as with a clamping claw (14) which is associated with each support foot (5) and constructed as a loose component and which encompasses the outside roof contour or the rain gutter which serves as a butting surface for the clamping claw, and can be clamped against its butting surface by means of a clamping device (6, 19), wherein the clamping device (6, 19) passes loosely through the support foot (5) and engages a region of the supporting beam (1) located between the support feet (5), wherein the clamping claw (14) comprises a claw portion (15) which is associated with the roof contour (21) or the rain gutter, characterised in that the clamping claw (14) additionally comprises a support portion (16) which is supported on the support foot (5).

**2.** Supporting element according to claim 1, characterised in that the support region (22) for the support portion (16) is inclined obliquely outwards on the support foot.

**3.** Supporting element according to claim 1 or 2, characterised in that the support foot (5) comprises an oblong hole (23) which extends in the longitudinal direction of the support foot and of which the minor axis is adapted to the diameter of the clamping device (6, 19).

**4.** Supporting element according to any of claims 1 to 3, characterised in that the clamping device is constructed as a bolt which is supported by its head on the clamping claw and can be screwed into a nut fixed to the supporting beam, preferably pivotably fixed.

**5.** Supporting element according to any of claims 1 to 3, characterised in that the clamping device includes a clamping sleeve (6) which is attached to the supporting beam (1) and provided with an internal thread (20) at its free end, and a bolt (19) which is supported by its head (18) on the clamping claw (14) and can be screwed into the clamping sleeve (6).

## Revendications

**1.** Elément support de porte-charges pour toit de véhicule comportant un longeron porteur (1) s'étendant transversalement à l'axe longitudinal du véhicule et des pieds d'appui (5) fixes à celui-ci pour la pose sur le toit (11) ou dans la gouttière du véhicule, ainsi qu'un crampon de serrage (14), conçu sous forme d'un élément mobile, associé à chaque pied d'appui (5), qui entoure le contour du toit ou la gouttière disposé(e) à l'extérieur faisant office de surface d'appui pour le crampon de serrage, et qui peut être serré contre sa surface d'appui au moyen d'un dispositif de serrage (6, 19), le dispositif de serrage (6, 19) étant introduit de façon lâche à travers le pied d'appui (5) et s'accrochant dans celui-ci dans une zone du longeron porteur (1) disposée entre les pieds d'appui (5), le crampon de serrage (14) présentant ce faisant un élément de crampon (15) qui est associé au contour du toit (21) ou à la gouttière, caractérisé en ce que le crampon de serrage (14) présente en outre un élément d'appui (16), qui s'appuie contre le pied d'appui (5).

**2.** Elément support selon la revendication 1, caractérisé en ce que la zone d'appui (22) pour l'élément d'appui (16) est orientée sur le pied d'appui en biais vers l'extérieur.

**3.** Elément support selon la revendication 1 ou 2, caractérisé en ce que le pied d'appui (5) présente un trou oblong (23) s'étendant dans la direction longitudinale du pied d'appui, dont l'axe court est adapté au diamètre du dispositif de serrage (6, 19).

**4.** Elément support selon l'une des revendications 1 à 3, caractérisé en ce que le dispositif de serrage est conçu sous forme d'un boulon, qui s'appuie par sa tête contre le crampon de serrage et qui peut être vissé dans un écrou, disposé de préférence de façon mobile dans le longeron porteur.

**5.** Elément support selon l'une des revendications 1 à 3, caractérisé en ce que le dispositif de serrage comporte un manchon de serrage (6) fixé au longeron porteur et doté d'un filet de vis intérieur (20) en son extrémité libre et un boulon (19) s'appuyant avec sa tête (18) contre le crampon de serrage (14) et pouvant être vissé dans le manchon de serrage (6).

Fig.1

Fig.2

Fig.3